Europäisches Patentamt

European Patent Office

Office européen des brevets

(11) Numéro de publication: **0 379 457**

**A2**

## (12) DEMANDE DE BREVET EUROPEEN

(21) Numéro de dépôt: **90440005.8**

(22) Date de dépôt: **18.01.90**

(51) Int. Cl.⁵: **B27F 7/21**

(30) Priorité: **18.01.89 FR 8900732**
**18.01.89 FR 8900733**

(43) Date de publication de la demande:
**25.07.90 Bulletin 90/30**

(84) Etats contractants désignés:
**AT BE CH DE ES GB IT LI LU NL**

(71) Demandeur: **TOLEMECANE S.A.R.L.**
**21-23, rue Eugène Levasseur**
**F-93230 Romainville(FR)**

(72) Inventeur: **Chazal, Marc**
**12, rue Moissan**
**F-93130 Noisy-Le-Sec(FR)**
Inventeur: **Mongendre, Alain**
**107, avenue des Arts**
**F-93370 Montfermeil(FR)**

(74) Mandataire: **Metz, Paul**
**Cabinet METZ PATNI 63, rue de la Ganzau**
**B.P. 63**
**F-67024 Strasbourg Cédex(FR)**

(54) Machine portable pour la pose automatique d'agrafes et agrafe ainsi posée.

㊲ Machine portable pour la pose automatique d'agrafes et agrafe ainsi posée.

Machine à agrafer, caractérisée en ce qu'elle se compose d'un mécanisme d'amenée (6) des agrafes à plat à partir d'un magasin (2) et d'un ensemble double de cambrage-éjection (8) destiné à former une agrafe et à la poser en automatique par enfoncement dans un support plan, agrafe se composant d'un corps plat (18) à tête (19) en forme de courbe périphérique délimitant un évidement, tête prolongée par un tronc (22) pourvu de saillies latérales rabattables en forme de picots (25).

Cette invention intéresse les fabricants d'agrafes et de machines automatiques d'agrafage.

FIG.1

# Machine portable pour la pose automatique d'agrafes et agrafe ainsi posée

La présente invention se rapporte à une machine à agrafer pour la pose automatique d'agrafes du type à cosses ou à picots dans les supports les plus divers et à l'agrafe ainsi utilisée.

Les agrafes du type à cosses ou à picots, telles que celles posées par la machine selon l'invention, sont plus particulièrement adaptées à servir d'attache à un cadre ou à tout autre objet plan à suspendre ou à accrocher à une paroi par une tige, clou ou autres éléments de fixation enfoncés dans cette paroi.

En effet, ces agrafes comprennent une prolongation en forme d'attache au travers de laquelle passe l'élément de fixation. Elles comportent, à leur autre extrémité, des picots qui seront rabattus perpendiculairement au corps de l'agrafe pour venir s'enfoncer dans le support à maintenir.

Ces agrafes sont fabriquées par découpage dans des bandes ou des feuilles de métal. Elles sortent à plat de la découpeuse et sont empilées et collées à plat entre elles pour constituer un bloc compact d'une suite d'agrafes qui seront individualisées puis mises en forme automatiquement pour être enfoncées dans le support.

Si les opérations d'individualisation, de cambrage et d'enfoncement se montrent simples, prises isolément, leur succession rapide dans le cadre d'un procédé automatique à cadences industrielles s'avère peu évidente à automatiser.

En effet, la grande diversité des opérations se succédant entraîne des difficultés multiples d'enchaînement et de synchronisation.

La présente invention a pour but de maîtriser la succession de ces diverses opérations en vue de l'obtention de cadences industriellement intéressantes.

A cet effet, l'invention se rapporte à une machine portable pour la pose en automatique d'agrafes du type à cosses ou à picots, comprenant un mécanisme d'amenée à partir d'un magasin et un ensemble de pose dont le fonctionnement est commandé par une pédale extérieure, caractérisée en ce que le mécanisme d'amenée est un tiroir à plateau de réception des agrafes à plat, actionné par un vérin d'amenée pour le transfert des agrafes à plat du magasin jusqu'à l'ensemble de pose et en ce que l'ensemble de pose est également un ensemble de conformation des agrafes appelé ensemble double de cambrage-éjection comprenant en disposition concentrique le long et autour d'une tige centrale un dispositif de cambrage et un dispositif d'éjection-poussée.

L'invention se rapporte également à une agrafe à cosses ou à picots pour l'accrochage direct de tableaux et, de façon générale, de tout support plan sur un mur ou une paroi, caractérisée en ce qu'elle se compose d'un corps plat à tête en forme de courbe périphérique délimitant une ouverture, tête prolongée par un tronc pourvu de saillies latérales rabattables en forme de cosses ou de picots.

Les tableaux, photographies, cartes et autres objets plans comportent différents moyens pour assurer leur fixation-accrochage sur un mur ou sur une cloison.

Le moyen le plus simple et le plus connu consiste à prévoir un lien entre deux supports fixés dans deux éléments du cadre. Chacune des extrémités du lien est immobilisée sur le support correspondant.

Ce moyen, s'il apparaît simple, présente toutefois de nombreux inconvénients.

Il s'agit d'un moyen de fortune dont la solidité ne peut être garantie.

Par ailleurs, il nécessite la pose de deux éléments-supports pour la fixation des extrémités du lien.

Finalement, la bonne présentation du tableau nécessite souvent plusieurs réglages et adaptations.

On connaît également la technique utilisant une pièce en crochet à fixer au mur et, en regard, une pièce à anneau que l'on fixe directement sur un des élé ments constituant le cadre.

Il existe également une pièce à évidement traversé par une vis ou tout autre support fixé dans le mur.

Ces méthodes et éléments ne peuvent donner satisfaction en raison des difficultés liées à la pose : adresse manuelle, ajustement... et du prix de revient ainsi qu'au risque d'endommager le cadre.

Il existe par ailleurs de simples oeillets fixés directement sur un cadre ou sur le verso d'un élément plan pour des supports de faible poids.

Ce mode d'accrochage tend actuellement à être abandonné en raison de l'impossibilité du stockage ou du rangement par empilement ou en suites horizontales.

En effet, la pression des cadres ou des supports les uns contre les autres laisse la forme de la pièce en oeillet comme imprimée dans le cadre ou le support voisin.

Ainsi, l'esthétique des cadres ou supports est dénaturée, rendant ceux-ci invendables lorsque la marque imprimée va jusqu'à la déchirure.

La présente invention a pour but de remédier à l'ensemble de ces différents inconvénients en proposant une agrafe particulièrement simple qui permet de se fixer sur pratiquement tous les supports plans par simple enfoncement et de constituer simultanément l'attache nécessaire a l'accrochage au mur du support concerné.

L'agrafe imaginée par les inventeurs a pour but de présenter sur une seule et même pièce, d'une part la liaison avec un élément de fixation sur lequel elle est destinée à s'accrocher et d'autre part la fixation par ancrage dans ou sur le support concerné.

On citera ci-après les avantages les plus importants de la machine de pose automatique et de l'agrafe selon l'invention :

- possibilité d'admettre les agrafes à plat, c'est-à-dire non cambrées dans le magasin ; cette possibilité permet le conditionnement des agrafes à plat, lors de la fabrication ;
- constitution simple de la machine ;
- le pliage des picots et la pose des agrafes s'effectuent par un seul ensemble pneumatique ;
- le pliage des picots et le guidage s'effectuent par la même pièce ;
- l'agrafe est réalisée en une seule pièce ;
- sa fabrication est simple ;
- son coût unitaire s'avère des plus modiques ;
- la pose totalement automatique est réalisée par des moyens mécaniques simples et peu coûteux.

Les caractéristiques techniques et d'autres avantages de l'invention sont consignés dans la description qui suit, effectuée à titre d'exemple non limitatif sur un mode d'exécution en référence aux dessins accompagnants dans lesquels :

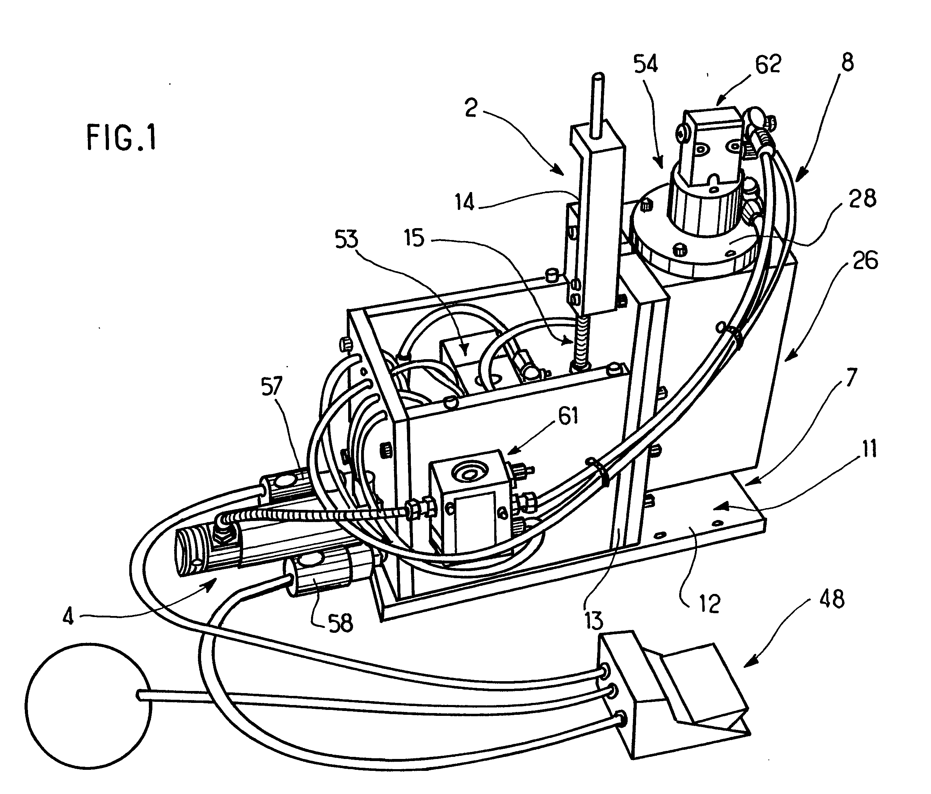

. la figure 1 est une vue schématique en perspective d'ensemble illustrant la machine selon l'invention ;

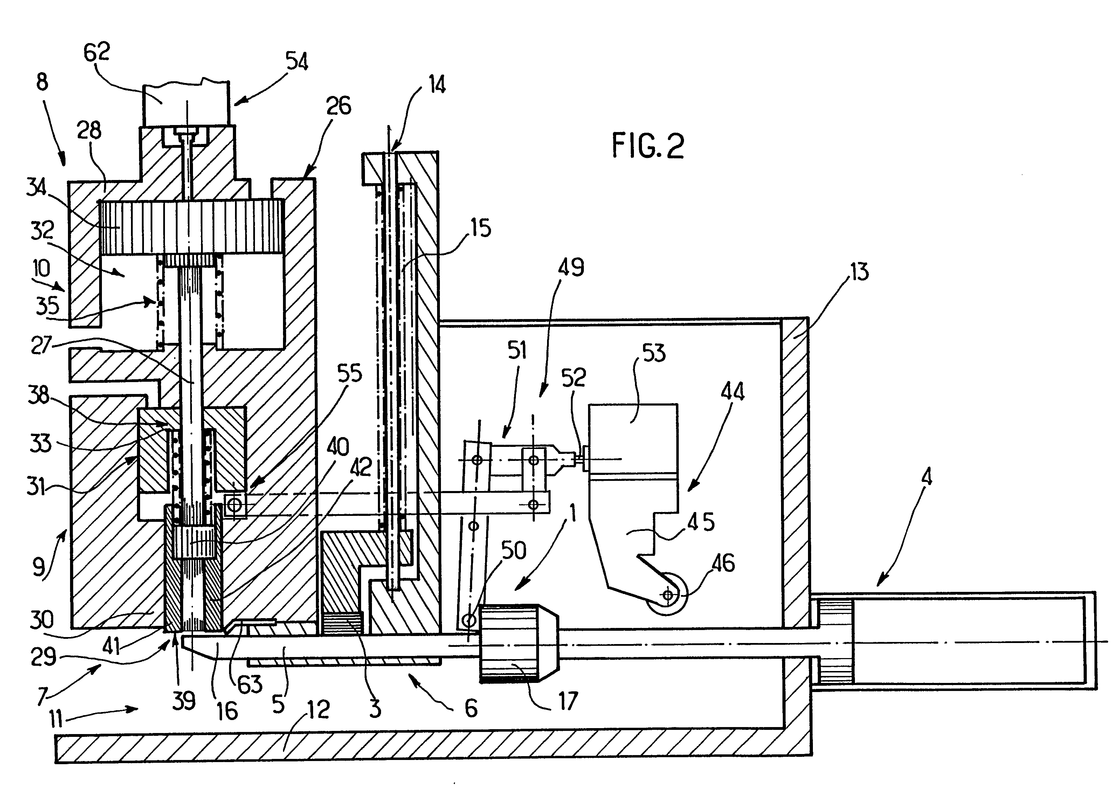

. la figure 2 est une vue générale simplifiée en coupe longitudinale de l'ensemble de la machine ;

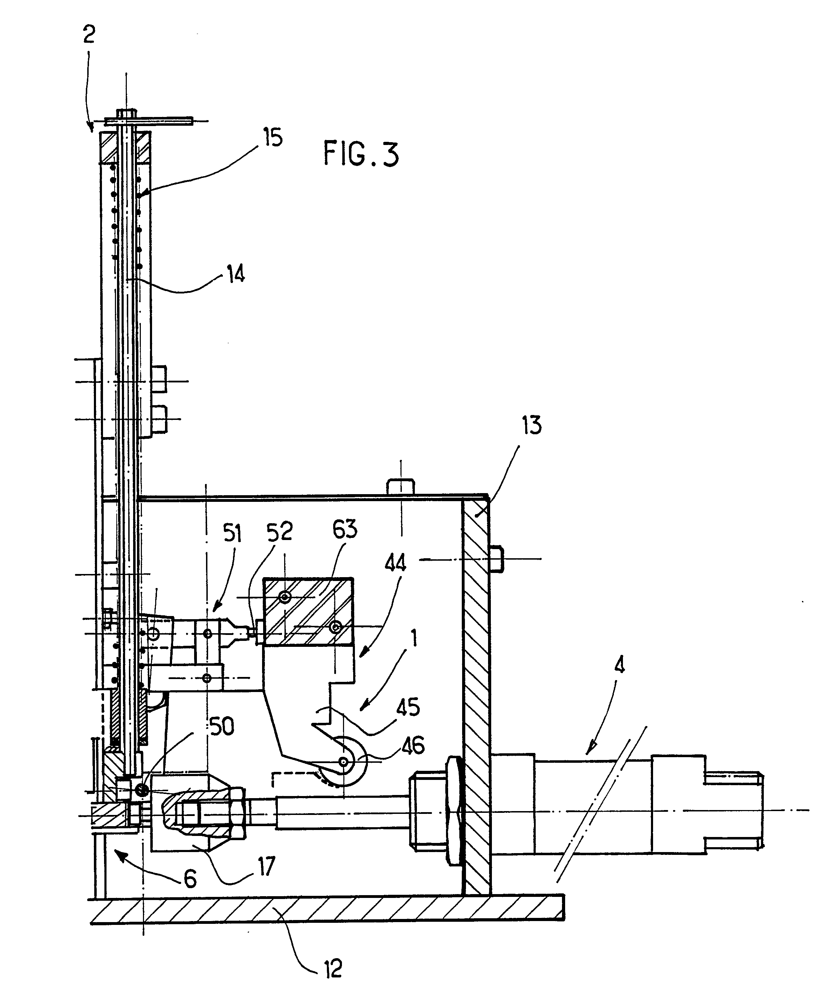

. la figure 3 est une vue de détail en coupe longitudinale du mécanisme d'amenée et de sa commande ;

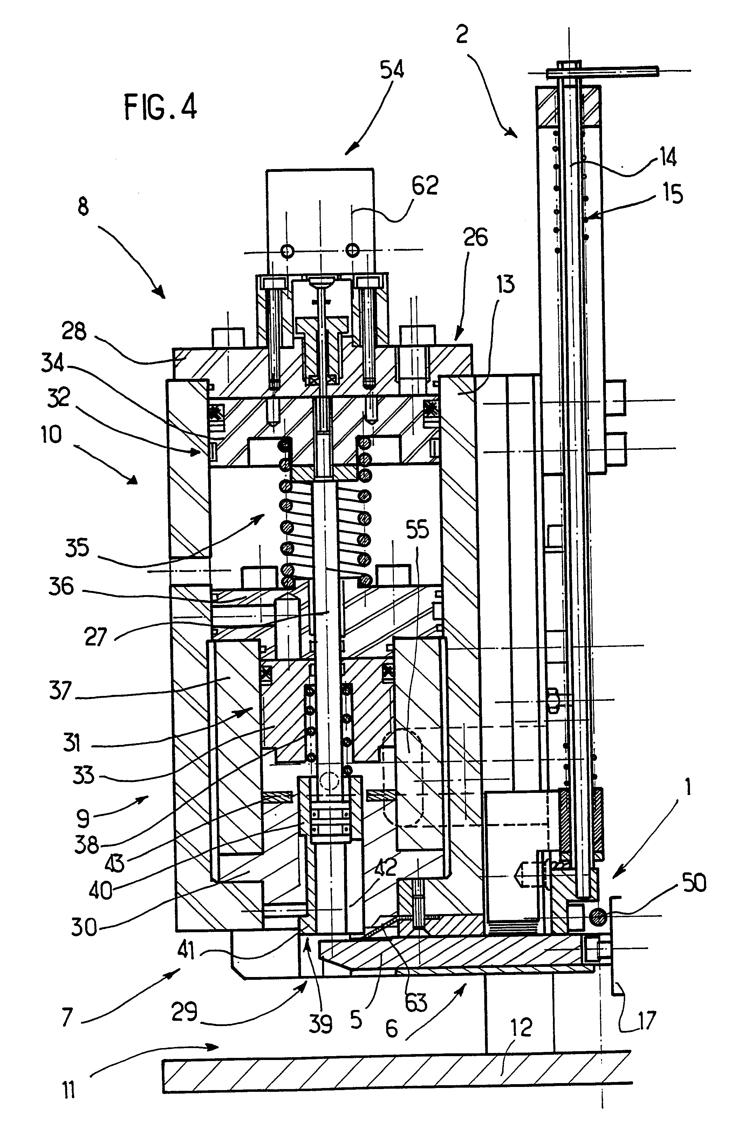

. la figure 4 est une vue de détail en coupe longitudinale de l'ensemble double de cambrage-éjection ;

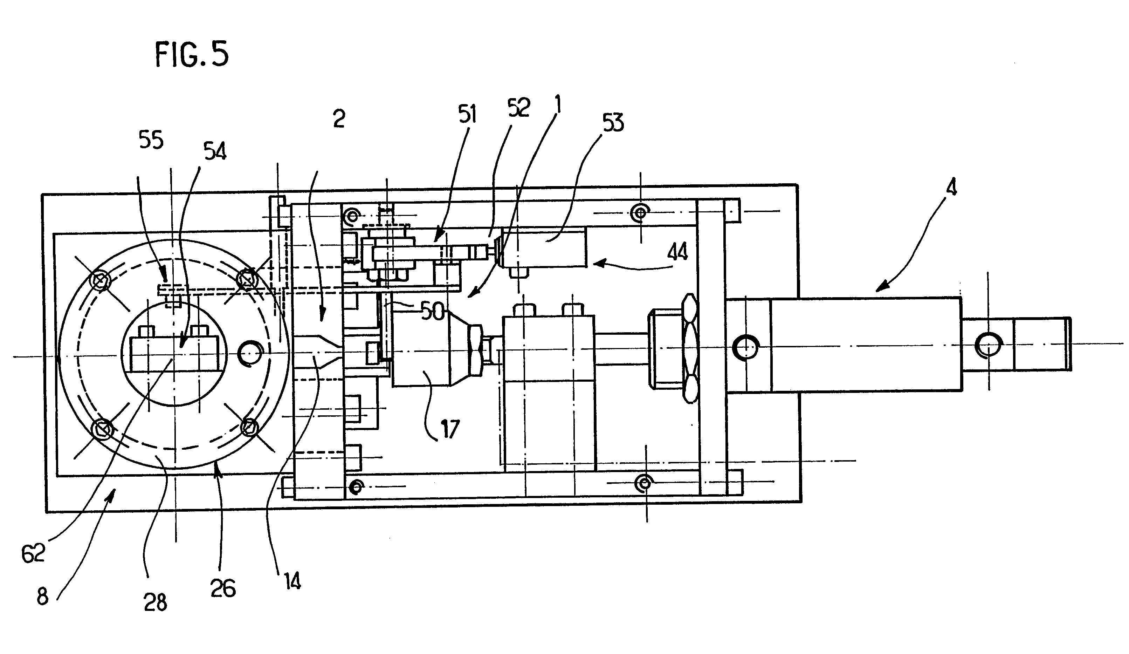

. la figure 5 est une vue générale en plan ;

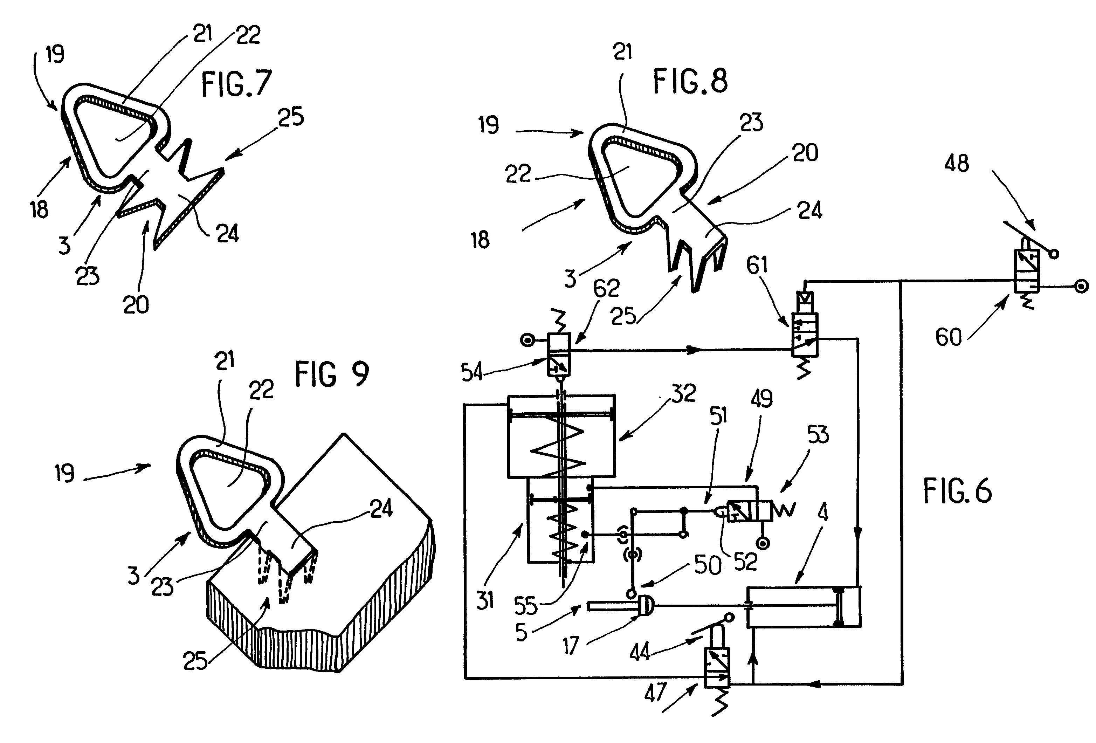

. la figure 6 est le schéma du circuit pneumatique de commande de fonctionnement ;

. les figures 7 et 8 sont des vues en perspective respectivement à plat et picots relevés d'un type d'agrafe utilisée dans la machine ;

. la figure 9 est une vue schématique en perspective montrant l'agrafe posée sur un support plan ;

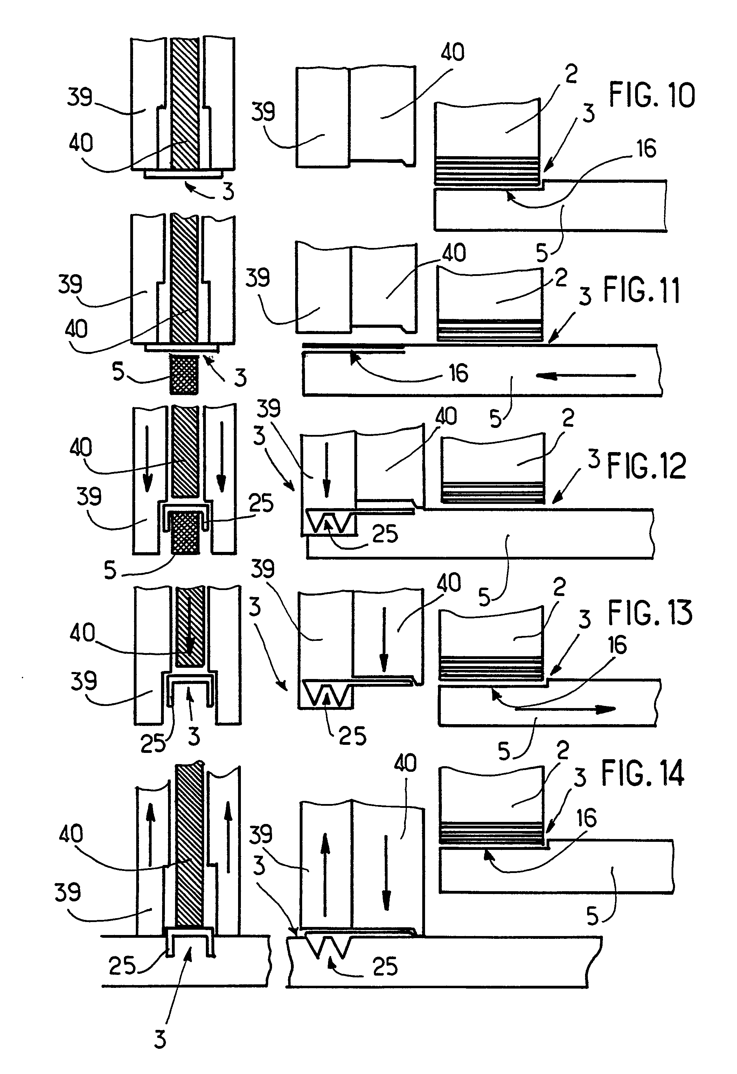

. les figures 10 à 14 sont des schémas doubles correspondants, de face et de profil, illustratifs du principe de conformation et de pose de l'agrafe.

- les figures de 15 à 19 sont des vues en plan ou en perspective de variantes dérivées ;

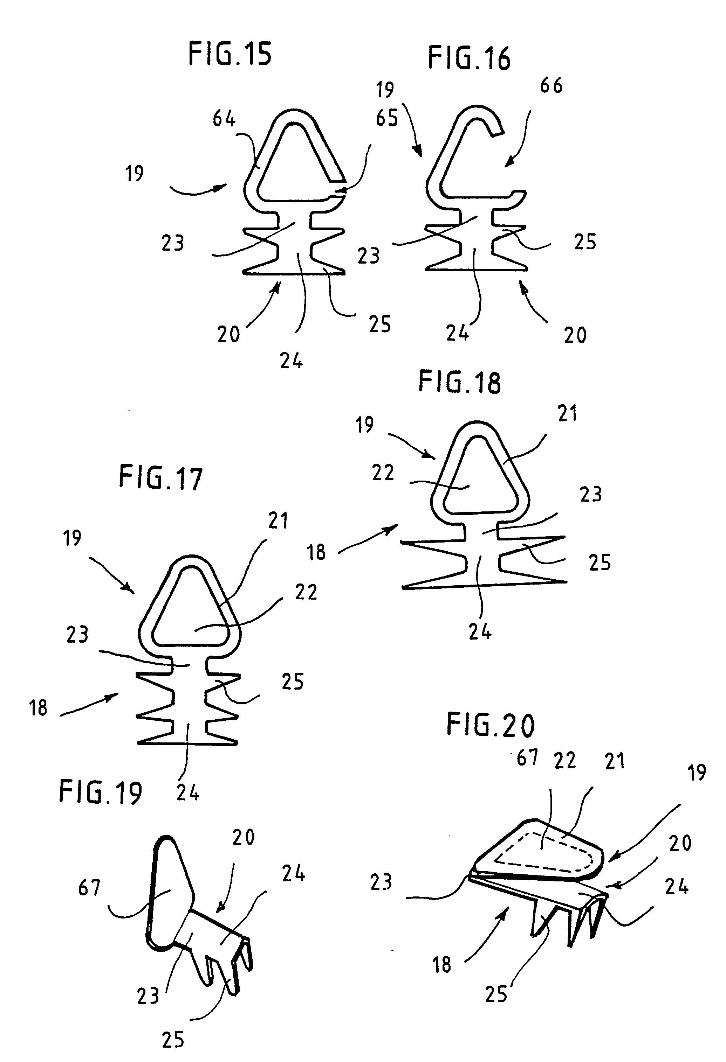

- la figure 20 est une vue en perspective schématique d'une variante à tête repliée ou rabattue.

La présente invention procède de l'idée générale inventive selon laquelle les agrafes sont présentes en réserve, empilées à plat dans le magasin et y forment une colonne. L'agrafe est amenée à plat dans l'ensemble de pose et les picots des agrafes ne sont repliés en position d'enfoncement que juste avant l'opération de poussée-éjection de l'agrafe hors de l'ensemble mécanique de pose et enfoncement dans le support concerné.

La machine automatique de pose selon l'invention se compose des fonctions générales suivantes.

Un poste de chargement 1 se compose d'un magasin vertical 2 à agrafes 3, d'un vérin d'amenée 4 actionnant un tiroir d'amenée 5 d'un mécanisme de va-et-vient 6, coulissant entre une position de chargement sous le magasin et une position de pliage des picots et de pose de l'agrafe.

La machine comporte, à son autre extrémité, un poste 7 de pose des agrafes se composant d'un ensemble mécanique double de cambrage-éjection 8, comprenant en disposition concentrique un dispositif de cambrage 9 et un dispositif d'éjection-poussée 10 disposé au-dessus d'une platine de pose 11 formant une base d'assise 12 sur laquelle est monté le corps de l'appareil dont les différents organes sont maintenus mécaniquement sur une ossature 13 fixée à la base d'assise 12 formée, par exemple, de montants reliés par des panneaux de fermeture.

Une carrosserie adaptée est prévue pour conférer à la machine une esthétique industrielle.

On examinera maintenant plus en détail les différentes parties constituantes de la machine.

Le magasin 2 à agrafes 3 est du type colonne. Il s'agit d'un évidement vertical 14 servant de guide aux agrafes empilées et collées à plat les unes sur les autres. Celles-ci sont contraintes en poussée vers le bas par un ressort de pression 15.

Comme on le verra ci-après, les agrafes sont débitées de l'empilement et apportées une à une, à plat, au poste de pose 7 par le mécanisme de va-et-vient 6 à tiroir d'amenée 5 en vue d'être préparées ou conformées par l'ensemble double de cambrage-éjection 8.

A cet effet, ledit tiroir d'amenée 5 présente à son extrémité avant une plage supérieure en retrait formant un plateau de réception 16 conformé dans sa partie arrière selon la forme générale des têtes des agrafes à plat.

Celles-ci sont ainsi maintenues pendant le déplacement du tiroir et sa présentation devant l'ensemble double de cambrage-éjection.

Le tiroir 5 est actionné par le vérin d'amenée 4 dont le piston est articulé par une crosse 17 à l'extrémité arrière du tiroir d'amenée 5 pour son déplacement par coulissement entre la sortie du magasin 2 lorsque le piston est en fin de course de retrait et la sortie de l'ensemble de cambrage-éjection lorsque le piston est en fin de course de poussée.

Comme on le verra ci-après, les positions de fin de course de poussée et de retrait sont détectées par des dispositifs appropriés.

Les agrafes sont du type de celles présentées sur les figures 7, 8 et 9.

Elles présentent avant leur mise en condition pour la pose une forme plane résultant du procédé de fabrication par découpage dans une bande ou une feuille de métal.

Elles présentent un corps 18 comprenant une tête 19 d'accrochage de forme générale en anneau et une partie arrière 20 de fixation. La tête 19 est constituée par une bande périphérique fermée 21, par exemple de forme géométrique simple, délimitant une ouverture-éjection 22 à travers laquelle passe l'élément de fixation enfoncé dans le mur ou dans la paroi.

A cet effet, une forme triangulaire à sommet dirigé vers le haut convient parfaitement. Elle comporte l'avantage important lié à l'existence d'un sommet à l'extrémité de deux rampes convergentes qui peut être utilisé comme point d'appui et de centrage sur l'élément de fixation.

La tête 19 est reliée à sa partie arrière par une zone de raccordement 23 prolongée par un tronc rectangulaire allongé 24 servant d'embase. Ce tronc comporte des saillies latérales sous la forme d'une pluralité de picots tels que 25 par exemple au nombre de quatre.

Ces picots sont rabattables de par la faible épaisseur du métal pour constituer des pièces d'ancrage lorsqu'enfoncés dans le support à accrocher.

Bien entendu, diverses autres formes d'agrafes à picots sont envisageables et fonctionneraient sur la même machine moyennant de simples adaptations évidentes.

On en décrira plusieurs variantes ci-après.

Le tiroir 5 du mécanisme de va-et-vient 6 présente une extrémité avant conformée selon un profilé de section rectangulaire de largeur égale à celle du tronc 24 de l'agrafe duquel font saillie les picots 25. Ceux-ci, comme on le verra ci-après, sont rabattus contre les chants latéraux de cette extrémité qui sert d'enclume au dispositif de cambrage 9 réalisant le rabattement des picots.

La machine se poursuit vers l'avant par l'ensemble double de cambrage-éjection qui se présente sous la forme d'un corps cylindrique 26 renfermant les deux dispositifs concentriques précédemment indiqués: le dispositif de cambrage 9 et le dispositif d'éjection-poussée 10 ou de pose qui se développent le long d'une tige centrale 27.

Cet ensemble double est représenté plus particulièrement sur les figures 2 et 4.

Une représentation simplifiée de ceux-ci apparaît sur les schémas illustratifs du fonctionnement (figures 10 à 14).

Ce corps cylindrique 26 est obturé en partie supérieure par une pièce de fermeture 28 sur laquelle se trouve monté un détecteur de position dont il sera question ci-après.

Le corps 26 présente en partie inférieure une ouverture 29 à la sortie d'un guide 30 pour le passage des agrafes au moment de leur pose.

Ce corps constitue l'enveloppe extérieure de deux vérins pneumatiques successifs inférieur et supérieur, respectivement vérin de cambrage 31 et vérin de pose 32. Chaque vérin possède un piston propre, à savoir pour le premier un piston inférieur de cambrage 33 et, pour le second, un piston supérieur de pose 34.

Le piston de pose 34 est monté en rappel élastique vers le haut par un ressort central 35 s'appuyant sur une flasque intérieure 36.

Le vérin de cambrage 31 est logé dans une enveloppe inférieure supplémentaire 37 sur le chant supérieur de laquelle s'appuie la flasque intérieure 36. Il renferme le piston de cambrage 33 qui se déplace le long de la tige centrale 27.

Le piston de cambrage est guidé par la tige centrale 27 qui le traverse. Il est évidé en partie centrale pour le logement d'un ressort de rappel 38 en position haute, monté sur la tige centrale.

L'ensemble double se poursuit vers le bas par un poinçon de cambrage 39 et un poinçon de pose 40, coaxial au poinçon de cambrage, c'est-à-dire coulissant dans ce dernier.

Comme représenté, le poinçon de cambrage est guidé par le guide 30 dans son mouvement de descente vers le bas et comporte en partie inférieure deux ailes 41 et 42 destinées à rabattre les picots 25 de l'agrafe contre les chants latéraux de l'extrémité avant du tiroir 5 du mécanisme de va-et-vient du dispositif d'ame née, utilisée comme enclume. Il est actionné vers le bas par la descente du piston de cambrage 33.

Une bague de choc 43 en matière plastique limite le déplacement du piston de cambrage vers le bas. Elle sert de butée non métallique à ce piston permettant d'en limiter l'usure.

L'automatisation de fonctionnement à partir d'un fluide moteur est assurée par un ensemble de commandes en boucle fermée comprenant divers détecteurs.

On distingue ainsi un détecteur de fin de retrait 44 constitué d'un palpeur 45 à galet basculant 46 actionné par la crosse 17 articulée au tiroir de la tige du piston du vérin d'amenée 4.

Le passage de cette crosse en fin de course de retrait actionne mécaniquement le galet 46 et provoque la validation de commande du vérin de pose 32 sur une vanne de pose 47 après action de commande donnée sur une pédale extérieure de commande 48.

On distingue également un détecteur 49 de fin de poussée indiquant la fin de course de poussée du vérin d'amenée sous la forme d'une tige 50 faisant partie d'un mécanisme basculant 51 de détection dont l'une des extrémités actionne par un téton 52 une vanne de cambrage 53.

La crosse 17 du piston du vérin d'amenée 4 arrive en fin de course de poussée en butée sur la tige 50 qui entraîne l'ensemble du mécanisme du détecteur de fin de poussée en basculement par le téton 52 agissant sur la vanne de cambrage 53 pour permettre l'admission du fluide moteur dans le vérin de cambrage en vue de la descente du piston de cambrage.

Deux autres détecteurs de pose 54 et de fin de cambrage 55 renseignent sur la fin de course haute du piston de pose et la fin de course basse du piston de cambrage. Il s'agit pour le premier d'un détecteur de fin de cycle situé au-dessus du bloc de l'ensemble double de cambrage-éjection 8 actionné par la position haute du piston de pose par l'intermédiaire d'une prolongation de la tige centrale 27 du mécanisme de pose et ensuite d'un détecteur de fin de cambrage articulé par une biellette 56 au dispositif de détection de fin de poussée du vérin d'amenée.

Le détecteur de pose 54 permettant de savoir si le piston de pose est en position haute, agit directement sur une vanne de détection de pose autorisant l'admission du fluide sous pression dans le circuit de commande du vérin d'amenée 4.

On examinera maintenant en référence à la figure 6 le circuit pneumatique de commande. Il est raccordé à un générateur de fluide sous pression, représenté par un cercle sur la figure 1, par l'intermédiaire de deux coupleurs rapides tels que 57 et 58, à travers un circuit d'alimentation aboutissant en différents points symbolisés par un rond encerclé.

Une entrée supplémentaire 59 est prévue pour la pédale extérieure de commande 48.

La pédale de commande 48 actionne un distributeur 60 relié au fluide sous pression pour réaliser une impulsion de pression en vue d'actionner une vanne de commande 61 du vérin d'amenée 4.

Cette vanne est elle-même alimentée en pression par un distributeur principal 62 constituant la partie pneumatique du détecteur de pose 54, actionné par la prolongation de la tige centrale 27 de l'ensemble de cambrage-éjection.

Le vérin de pose 32 est alimenté au travers de la vanne de pose 47 actionnée par le détecteur de fin de retrait 44 à galet à partir de la pédale de commande 48.

Le vérin de cambrage 31 est alimenté au travers de la vanne de cambrage 53 à partir de la pression du fluide moteur et par la commande provenant de la double détection du détecteur 46 de fin de poussée du vérin d'amenée 4 et du détecteur de cambrage 54 indiquant la position basse du piston de cambrage.

Il faut mentionner également sur le trajet du tiroir l'existence d'une patte de retenue élastique 63 qui agit à la manière d'un dispositif antiretour pour éviter que le tiroir reprenne, lors de son retour, l'agrafe qu'il vient d'amener.

On expliquera maintenant les différentes phases de fonctionnement d'un cycle de pose automatique d'une agrafe à l'aide de la machine selon l'invention, plus particulièrement en référence aux figures.

Comme indiqué, la fin et le départ de chaque cycle sont caractérisés par la situation d'une agrafe en place, picots repliés, prête à être posée. La première opération consiste donc à déclencher la pose de l'agrafe par action sur la pédale de commande 48.

On décrira un cycle complet de fonctionnement en supposant que la machine a déjà fonctionné.

Toute première action dans le cycle de fonctionnement sur la pédale commande l'admission de l'air comprimé dans la machine par la vanne 62 du détecteur de pose 54.

Selon la position du détecteur 49 de fin de poussée traduisant l'état d'arrêt du cycle, la pression est admise dans le circuit de commande du vérin de pose 32 qui applique, après retrait du tiroir 5, l'agrafe préalablement préparée, c'est-à-dire formée par le rabattement des picots, contre le support présenté sous l'ouverture inférieure de l'ensemble double de cambrage-éjection.

Le retrait du piston de pose 34 s'effectue automatiquement par l'effet du ressort central de rappel 35 du vérin de rappel 32.

Le retrait du piston de pose provoque le déplacement vers le haut de la tige centrale 27 qui actionne le détecteur de pose 54 en vue d'armer le circuit pneumatique dans une nouvelle phase de présentation de l'agrafe.

Le vérin d'amenée 4 est alors commandé en retrait jusqu'au passage de sa tête sous le détecteur de fin de retrait 44 à galet (figure 6).

L'extrémité du tiroir d'amenée 5 arrivant sous le magasin 2 est chargée par une agrafe sortant à plat sous l'effet de la pression du ressort de magasin 15. Le vérin d'amenée est alors actionné en poussée et apporte l'agrafe, portée par le plateau 16 du tiroir d'amenée 5, jusqu'en présentation sous la sortie de l'ensemble double de cambrage-éjection (figures 10 et 11).

Le contact de butée de poussée de la crosse du piston actionnant le tiroir d'amenée 5 du mécanisme de va-et-vient 6 provoque à travers la vanne de cambrage 53 l'alimentation du vérin de cambrage 31. Le piston de cambrage 31 descend et, par poussée sur le poinçon de cambrage 39, force les picots en rabattement contre les chants latéraux de l'extrémité du tiroir (figure 12).

Après contact de fin de course basse du piston de cambrage par le détecteur de cambrage 55, l'alimentation en fluide sous pression est coupée et le piston de cambrage se retire par l'effet du rappel élastique provoqué par son ressort 38.

La machine est alors prete pour un nouveau cycle de fonctionnement commençant par la pose de l'agrafe déclenchée par l'action sur la pédale de commande.

Diverses autres formes d'agrafes conformes à l'esprit inventif peuvent être imaginées et pour compléter la description, on décrira maintenant quelques variantes en référence aux figures de 15 à 20.

On pourra tout d'abord (figure 15) utiliser une tête d'accrochage constituée par une bande périphérique ouverte 64 sur un segment 65, par exemple situé au voisinage de son raccordement avec le tronc 24.

La longueur de ce segment peut varier plus ou moins jusqu'à réaliser une variante à crochet 66, à suspendre à la manière classique d'un support de vêtement, cintre ou porte-manteau (figure 16). Les effets techniques et avantages mentionnés ci-dessus restent entiers pour cette variante. Il faut pourtant ajouter l'avantage d'une pose plus rapide et plus aisée.

Selon une autre variante, le nombre (figure 17) et la taille (figure 18) des cosses ou des picots peuvent changer. Ainsi, des variantes comportant une pluralité de picots, telle la variante à six picots représentée sur la figure 17, seront dites renforcées.

D'autres variantes encore procèdent par la modification de la taille de l'ouverture-éjection 22 pouvant aller jusqu'à une pièce pleine 67. Selon cette variante, on peut envisager de rabattre la tête de manière à confectionner une patte d'équerre (figure 19).

On peut envisager également, comme représenté sur la figure 20, une tête entièrement rabattue qui permettrait, à la manière d'une pince, de bloquer une plaque de verre tel un sous-verre ou tout autre objet plan contre un premier support.

L'invention a été décrite ci-dessus en détail. Il est bien entendu cependant que diverses modifications simples, adjonctions, variantes directes, substitutions par des moyens équivalents entrent dans le cadre de la présente protection.

**Revendications**

1. Machine pour la pose automatique d'agrafes, notamment d'agrafes à picots, comprenant un mécanisme d'amenée à partir d'un magasin (2) et un ensemble de pose dont le fonctionnement est commandé par une pédale extérieure (48), caractérisée en ce que le mécanisme d'amenée est un tiroir (5) à plateau de réception (16) des agrafes à plat, actionné par un vérin d'amenée (4) pour le transfert des agrafes à plat du magasin jusqu'à l'ensemble de pose et en ce que l'ensemble de pose est également un ensemble de conformation des agrafes appelé ensemble double de cambrage-éjection (8) comprenant en disposition concentrique le long et autour d'une tige centrale (27) un dispositif de cambrage (9) et un dispositif d'éjection-poussée (10).

2. Machine selon la revendication 1, caractérisée en ce que l'ensemble double de cambrage-éjection se composant du dispositif de cambrage (9) et du dispositif d'éjection-poussée (10) présente un corps cylindrique (26) obturé en partie supérieure par une pièce de fermeture (28) portant un détecteur de position, ouvert en partie inférieure à la sortie d'un guide (30) et en ce que ce corps constitue l'enveloppe extérieure de deux vérins pneumatiques successifs inférieur et supérieur, respectivement vérin de cambrage (31) et vérin de pose (32), chaque vérin possède un piston propre, à savoir, pour le premier, un piston inférieur de cambrage (33) et, pour le second, un piston supérieur de pose (34), le piston de pose (34) est monté en rappel élastique vers le haut par un ressort central (35) s'appuyant sur une flasque intérieure (36), le vérin de cambrage (31) est logé dans une enveloppe inférieure supplémentaire (37) sur le chant supérieur de laquelle s'appuie la flasque intérieure (36), il renferme le piston de cambrage (32) qui se déplace le long de la tige centrale (27), le piston de cambrage est guidé par la tige centrale (27) qui le traverse et est évidé en partie centrale pour le logement d'un ressort de rappel (38) en position haute, monté sur la tige centrale (27), et en ce que l'ensemble double se poursuit vers le bas par un poinçon de cambrage (39) et un poinçon de pose (40), coaxial au poinçon de cambrage, c'est-à-dire coulissant dans ce dernier et en ce que le poinçon de cambrage est guidé par le guide (30) dans son mouvement vers le bas et formé de deux ailes (41) et (42) destinées à rabattre les picots de l'agrafe contre les chants latéraux de l'extrémité avant du tiroir du mécanisme de va-et-vient du dispositif d'amenée, poinçon actionné vers le bas par la descente du piston de cambrage, une bague de choc (43) en matière plastique limite le déplacement du piston de cambrage vers le bas.

3. Machine selon les revendications précédentes caractérisée en ce qu'elle comporte un détecteur de fin de retrait (44) constitué d'un palpeur

(45) à galet basculant (46) actionné par la crosse (17) articulée au tiroir de la tige du piston du vérin d'amenée (4), le passage de cette crosse en fin de course de retrait actionne mécaniquement le galet (46) et provoque la validation de commande du vérin de pose (32) sur une vanne de pose (47) après action de commande donnée sur une pédale extérieure de commande (48), machine comprenant également un détecteur (49) de fin de poussée indiquant la fin de course de poussée du vérin d'amenée sous la forme d'une tige (50) faisant partie d'un mécanisme basculant (51) de détection dont l'une des extrémités actionne par un téton (52) une vanne de cambrage (53), ladite crosse (17) du piston du vérin d'amenée (4) arrive en fin de course de poussée en butée sur la tige (50) qui entraîne l'ensemble du mécanisme du détecteur de fin de poussée (49) en basculement par le téton (52) agissant sur la vanne de cambrage (53) pour permettre l'admission du fluide moteur dans le vérin de cambrage en vue de la descente du piston de cambrage.

4. Machine selon la revendication 2, caractérisée en ce qu'elle comporte d'une part un détecteur de pose (54) situé au-dessus du bloc de l'ensemble double de cambrage-éjection actionné par la position haute du piston de pose par l'intermédiaire d'une prolongation de la tige centrale (27) et d'autre part un détecteur de fin de cambrage (55) actionné par la position basse du piston de cambrage et articulé par une biellette 56 au dispositif de détection de fin de poussée du vérin d'amenée.

5. Machine selon l'une ou l'autre des revendications précédentes caractérisée en ce que le circuit pneumatique de commande raccordé à un générateur par deux coupleurs rapides (57) et (58) se compose d'une pédale de commande (48) actionnant un distributeur (60) actionnant une vanne de commande (61) du vérin d'amenée (4), ladite vanne étant alimentée en pression par un distributeur principal (62) actionné par la prolongation de la tige centrale (27) de l'ensemble de cambrage-éjection (8), en ce que le vérin de pose (32) est alimenté au travers d'une vanne de pose (63) actionnée par le détecteur de fin de retrait (44) à galet à partir de la pédale de commande (48) et en ce que le vérin de cambrage (31) est alimenté au travers d'une vanne de cambrage (64) à partir de la pression du fluide moteur et par la commande provenant de la double détection du détecteur (46) de fin de poussée du vérin d'amenée (4) et du détecteur de cambrage (54) indiquant la position basse du piston de cambrage.

6. Machine selon l'une ou l'autre des revendication précédentes, caractérisée en ce que le magasin (2) est du type colonne recevant l'empilement des agrafes à plat.

7. Machine selon l'une ou l'autre des revendications précédentes, caractérisée en ce qu'une patte de retenue (63) est prévue à l'extrémité de la course du tiroir agissant à la manière d'un dispositif antiretour.

8. Agrafe à picots pour l'accrochage direct de tableaux et, de façon générale, de tout support plan sur un mur ou une paroi, caractérisée en ce qu'elle se compose d'un corps plat (18) à tête (19) en forme de courbe périphérique délimitant une ouverture (22), tête prolongée par un tronc (24) pourvu de saillies latérales rabattables en forme de picots (25).

9. Agrafe selon la revendication 9, caractérisée en ce que la courbe périphérique entoure un évidement triangulaire à sommet dirigé vers le haut.

10. Agrafe selon la revendication 8, caractérisée en ce que la courbe périphérique est ouverte.

11. Agrafe selon la revendication 9, caractérisée en ce que l'ouverture (22) est évidée en partie centrale.

12. Agrafe selon l'une ou l'autre des revendications précédentes de 8 à 12, caractérisée en ce que la tête (19) est rabattue.

FIG.1

EP 0 379 457 A2

FIG.2

FIG.3

FIG. 4

FIG.5

FIG.7

FIG.8

FIG 9

FIG.6

EP 0 379 457 A2

FIG. 10

FIG. 11

FIG. 12

FIG. 13

FIG. 14

**FIG.15**

**FIG.16**

**FIG.18**

**FIG.17**

**FIG.20**

**FIG.19**